# EUROPEAN PATENT SPECIFICATION

(11) **EP 2 980 777 B1**
(45) Date of publication and mention of the grant of the patent: **26.04.2017**
(21) Application number: 14465516.4
(22) Date of filing: 29.07.2014
(51) Int. Cl.: G09F 3/20, B60R 11/04, B60S 1/08

(54) **A modular bracket assembly**
Modulare Klammeranordnung
Support modulaire

(43) Date of publication of application: 03.02.2016
(73) Proprietor: Conti Temic microelectronic GmbH, 90411 Nürnberg (DE); Continental Automotive GmbH, 30165 Hannover (DE)
(72) Inventor: Gheorghe, Lucian, 300440 Timisoara (RO); Lapugean, Alexandru, 300730 Timisoara, Jud. Timis (RO); Vuletici, Goran, 327367 Campia, Jud. Caras-Severin (RO); Munk, Dieter, 50859 Köln (DE)

(56) References cited:
- WO-A1-2008/014870
- DE-A1-102005 015 973
- DE-A1-102008 050 320
- DE-A1-102011 121 003
- DE-A1-102012 021 571
- US-A1- 2007 205 348

## Description

The invention relates to a method and apparatus for mounting components of a driver assistance system of a vehicle.

Brackets, in particular windshield brackets, are mechanical interface components used in the automotive industry to mount different electronic and/or mechanical components of a driver assistance system of a vehicle. The design of these brackets is dictated by the shape, position and orientation of the surface they are mounted on as well as the particular requirements of the components received by the brackets. With the increasing complexity of driver assistance systems used in modern vehicles, the number of components, in particular electronic components such as sensor devices mounted in a vehicle, has significantly increased. As a consequence of this, brackets adapted to receive mechanical, electromechanical or electronic components of a driver assistance system are becoming increasingly larger and more complex in themselves. For different sensor devices having interfaces for connecting them to the driver assistance system different brackets can be used which can differ largely in size and shape. Some brackets are provided to receive several electronic components such as cameras or rain sensors. With the increasing number of sensor devices mounted on a windshield, corresponding windshield brackets get increasingly larger. This is especially problematic when the optimal tooling direction for each interface on the bracket is different so that compromises are required to be able to produce the corresponding part, like drops in tolerances, higher risks and/or increased tool costs. The necessary increased size of the bracket has made the fitting between the bracket and the supporting surface of the vehicle such as the windshield more complicated.

A further disadvantage of conventional brackets is that a great variety of different brackets is required to fulfil the requirements of the different electronic components received by the different brackets. On the other hand, having all interfaces with different electronic components in a single part has the disadvantage that the flexibility is greatly limited. Consequently, configuration changes are impossible after a tool has started to manufacture such a bracket without making a completely new tool. Even without a configuration change, local design changes or tool corrections usually affect not only the desired area, but the entire bracket. This can cause situations where fixing one interface of a component that came out wrong initially affects another interface that was initially correct such that it is taken out of its corresponding specifications. Consequently, these types of brackets usually require multiple correction loops and finally compromises, i.e. accepted deviations, may still be required to finalize the assembly.

DE 10 2012 021571 A1, the closest prior art, relates to a bracket for attaching at least one component to a glass pane, in particular to a windshield of a motor vehicle. The bracket comprises a support body having a bottom with which the support body is adhered by means of adhesive to the glass pane, and a top, on the holding elements for attaching the at least one component on the support body are arranged. A first portion of the supporting body which is provided for fastening at least one component, is separated along two separate slots from the rest of the supporting body.

It is an object of the present invention to provide a bracket assembly which overcomes the above-mentioned disadvantages and which allows to fit multiple surfaces of different vehicle types.

This object is achieved according to a first aspect by a modular bracket assembly comprising the features of claim 1.

The invention provides a modular bracket assembly for mounting components of a driver assistance system of a vehicle, said modular bracket assembly comprising a plate, wherein the plate is adapted to be fixed to a surface of said vehicle. According to the invention, the plate having interface cutouts for interfaces of at least two brackets preassembled on said plate,
wherein each bracket includes components of the driver assistance system.

In a possible embodiment of the modular bracket assembly according to the first aspect of the present invention, the plate is flexible to be fixed on a curved surface of said vehicle.

In a further preferred embodiment of the modular bracket assembly according to the first aspect of the present invention, the plate is flexible to be fixed on a curved windshield of said vehicle.

This has the advantage that the modular bracket assembly can be used for larger windshield variations.

In an alternative embodiment the modular bracket assembly according to the first aspect of the present invention, the plate is rigid or semi-flexible. The plate can be made of sheet metal and undergo a prebending-process or it can be made of plastic material and moulded. A plate with a predetermined shape has the purpose to more accurately fix the relative position and orientation of the assembled interfaces at the expense of flexibility of larger windshield variations.

In a still further possible embodiment of the modular bracket assembly according to the first aspect of the present invention, the plate comprises cutouts for bending of said plate.

In a still further possible embodiment of the modular bracket assembly according to the first aspect of the present invention, the plate defines a relative position of all brackets preassembled on said plate.

In a still further possible embodiment of the modular bracket assembly according to the first aspect of the present invention, the plate is adapted to support accessory mounting components.

In a still further possible embodiment of the modular bracket assembly according to the first aspect of the present invention, the plate is made from a flexible sheet metal.

In a still further alternative embodiment of the modular bracket assembly according to the first aspect of the present invention, the plate is made from a flexible plastic sheet.

In a still further possible embodiment of the modular bracket assembly according to the first aspect of the present invention, the at least two brackets are fixed to the plate by snap rivets, screws or welding seams.

In a further possible embodiment of the modular bracket assembly according to the first aspect of the present invention, the plate is designed for a specific vehicle type.

The invention further provides a driver assistance system of a vehicle comprising the features of claim 10.

Accordingly, the invention provides a driver assistance system of a vehicle comprising electronic components included in different brackets preassembled on a plate of a modular bracket assembly, wherein said modular bracket assembly comprises:
a plate having interface cutouts for interfaces of at least two brackets preassembled on said plate,
wherein each bracket includes components of the driver assistance system,
wherein the plate is adapted to be fixed to a surface of said vehicle.

The invention further provides according to a third aspect a vehicle having the features of claim 11.

The invention accordingly provides a vehicle having a windshield attached to a chassis of the vehicle,
wherein at least one modular bracket assembly for mounting components of a driver assistance system of the vehicle is fixed to the windshield of the vehicle and/or to a surface of said vehicle's chassis.

The invention further provides according to a fourth aspect a method for mounting components of a driver assistance system of a vehicle comprising the features of claim 12.

The invention accordingly provides a method for mounting components of a driver assistance system of a vehicle, said method comprising:
preassembling at least two brackets including components of said driver assistance system on a connecting plate having interface cutouts for interfaces of said brackets; and
fixing the preassembled brackets to a surface of said vehicle.

In a possible embodiment of the method according to the fourth aspect of the present invention, the at least two brackets are connected to said connecting plate by snap rivets, screws or welding seams.

In a possible embodiment of the method according to the fourth aspect of the present invention, the connecting plate is manufactured from a flexible material to be fixed to a curved surface of a vehicle, in particular to a curved windshield of said vehicle and/or to a curved surface of said vehicle's chassis.

In a further possible embodiment of the method according to the fourth aspect of the present invention, the shape of said connecting plate is designed for the vehicle's production line.

In the following, possible embodiments of the different aspects of the present invention are described with reference to the enclosed figures in more detail.
- Figure 1: shows a schematic diagram for illustrating a possible exemplary embodiment of a modular bracket assembly according to the first aspect of the present invention;
- Figure 2: shows a flow chart of a possible exemplary embodiment of a method for mounting components of a driver assistance system of a vehicle according to a further aspect of the present invention;
- Figure 3: illustrates a rain sensor bracket, as an example of a bracket which can be preassembled with the method according to the present invention;
- Figure 4: shows a further exemplary bracket which can be preassembled using the method according to the present invention;
- Figure 5: shows an exemplary embodiment of a plate used in a modular bracket assembly according to the present invention;
- Figure 6: shows a perspective view on preassembled brackets mounted to the plate illustrated in Figure 5.

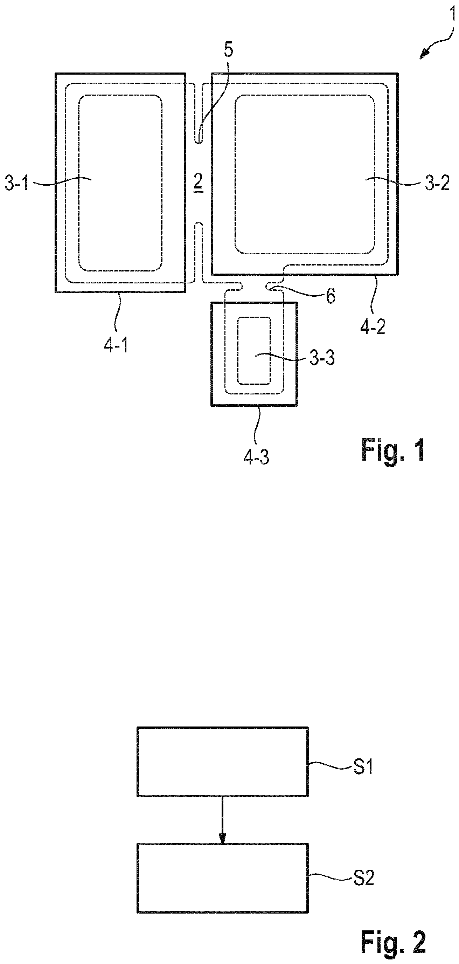

As can be seen in Figure 1 showing a schematic diagram of an exemplary embodiment for a modular bracket assembly 1 according to the first aspect of the present invention, the modular bracket assembly 1 comprises a plate 2 having interface cutouts 3-1, 3-2, 3-3 for interfaces of three brackets 4-1, 4-2, 4-3 preassembled on the plate 2. Each bracket 4-i can have at least one interface for connecting components within the respective bracket 4-i with a driver assistance system of the vehicle. In Figure 1, the interface cutouts 3-i of the different brackets 4-i are illustrated by dashed lines. The interfaces 3-i of the different brackets are in a possible embodiment generic standard interfaces of a predetermined shape. The plate 2 illustrated in Figure 1 is in a preferred embodiment a flexible plate which can be fixed on a curved surface of the vehicle. In a possible embodiment, the plate 2 is flexible to be fixed on a curved windshield of the vehicle.

As can be seen in Figure 1, the plate 2 comprises in the illustrated exemplary embodiment cutouts 5, 6 to increase the flexibility of the plate 2 by allowing a bending of the plate 2 in this area. In a possible embodiment, the form and depth of the cutouts 5, 6 can be varied during manufacturing of the plate 2 to define the flexibility of the plate 2 in this area. The cutouts 5, 6 define weak points of the plate 2 between the interfaces to better control how the plate 2 bends in this area. In a possible embodiment, the plate 2 is made from different flexible materials like sheet metal, plastic sheet, etc. The brackets 4-i can be fixed to the plate 2 in different ways. In a possible embodiment, the brackets 4-i are connected to the plate 2 by snap rivets or screws. In a further possible embodiment, the brackets 4-i are fixed to the plate 2 in a welding process, for instance by ultrasonic welding.

In a possible embodiment, the plate 2 can be adapted to support further accessory mounting components such as cable fixing hooks, etc. The flexible plate 2 can bend and fit in a possible embodiment multiple windscreens from multiple carlines. The plate 2 is shaped such that it defines a relative position of all brackets 4-i preassembled on the plate 2. The plate 2 can be designed for a specific vehicle type of a specific production line. In a possible embodiment, the modular bracket assembly 1 can be used for mounting components of a driver assistance system on a surface, in particular to a curved windshield of the vehicle. The modular bracket assembly 1 as illustrated in the schematic diagram of Figure 1 can be used with adjustable interfaces or non-adjustable interfaces which can be used on multiple carlines. The modular bracket assembly 1 as illustrated in Figure 1 has the advantage that the only part which has to be designed in each case is the connecting plate 2 of the modular bracket assembly 1. Moreover, this plate 2 can be used as a support for mounting different accessories like cable fixing hooks, etc.

According to a further aspect of the present invention, a method for mounting components of a driver assistance system of a vehicle is provided as illustrated in the flow chart of Figure 2. As can be seen in Figure 2, in a first step S1, at least two brackets 4-i including components of the driver assistance system are preassembled on a connecting plate, such as connecting plate 2 illustrated in Figure 1, having interface cutouts 3-i for interfaces of the respective brackets 4-i.

After preassembly of the brackets 4-i on the plate 2 in step S1, the preassembled brackets 4-i can be delivered to a production line of a customer in a single part, where all brackets 4-i are connected to each other by the single flexible plate 2.

In a further step S2, the preassembled brackets 4-i on the plate 2 are fixed to the surface of the vehicle. For instance, the preassembled brackets 4-i are fixed to a curved windshield of the vehicle in step S2. In a possible embodiment, the preassembled brackets 4-i connected by the connecting plate 2 are glued to the curved windshield. The production flow starts by designing the connecting plate 2, producing the interfaces, the plate 2 and any accessory components, assembling them all together according to the specifications so that at the customer's location only a single part arrives with all features connected by the flexible plate 2. In that way, one has all the benefits from using separate interfaces for sensors such as simpler parts (better fitting to the windshield surface, etc.), while integrating the benefits from having a classic single plastic part bracket like improved logistics and customer production friendliness, in particular the option of managing and tracking a single part or assembly and the possibility to have support for the accessories. The modular bracket assembly 1 as illustrated in Figure 1, allows to reduce the production costs by only having to redesign the plate 2, if necessary, and not the other components or brackets that can be formed by standard entities for all carlines.

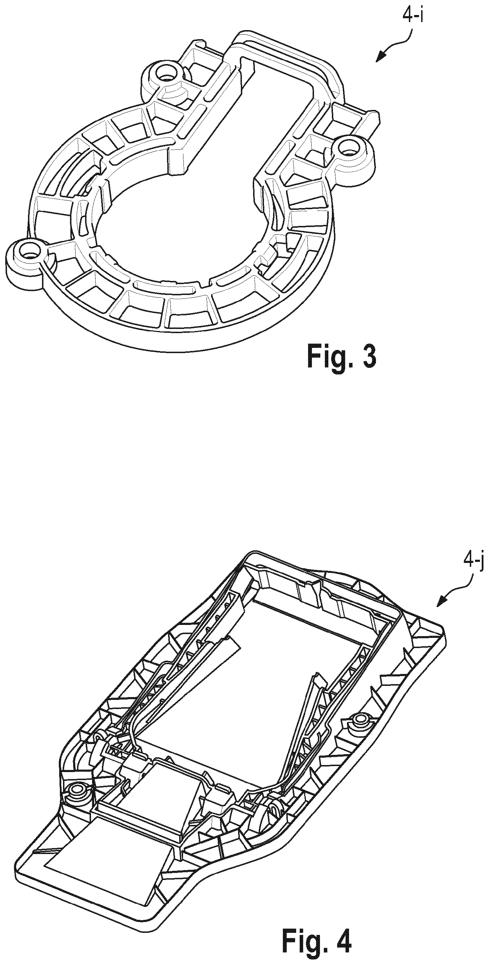

Figure 3 shows a perspective view on an exemplary bracket 4-i which can be preassembled on a plate 2 of the modular bracket assembly 1 according to the present invention. In the example of Figure 3, a bracket 4-i is provided for a rain sensor device of a driver assistance system.

Figure 4 shows a further example of the bracket 4-j which can be preassembled by using the connecting plate 2 of the modular bracket assembly 1 according to the present invention. In the exemplary embodiment of the bracket 4-j shown in Figure 4, the bracket 4-j itself is formed by two bracket components, i.e. a first bracket component and a second bracket component. In the exemplary bracket 4-j shown in Figure 4, a first bracket component is connected to a second bracket component by a snap-in rotational coupling allowing a relative rotation between both bracket components around a rotation axis to set an inclination angle fixed by joining both bracket components permanently with the set inclination angle. The first bracket component can be a fixed bracket component placed on a flat surface for adjusting the inclination angle between the fixed bracket component and the rotating mobile second bracket component to a predetermined set inclination angle corresponding to the inclination angle of the surface, i.e. the windshield of the vehicle. In a possible embodiment, the inclination angle between the first bracket component and the rotating mobile second bracket components is adjustable by means of an inserted rectified stand limiting the rotation of the mobile second bracket towards the flat surface. In a possible embodiment, the rectified stand can be inserted between the mobile second bracket and the flat surface and comprises a height defining the desired set inclination angle. In a possible embodiment, the snap-in rotational coupling between the first fixed bracket component of the bracket shown in Figure 4, and the second mobile bracket component comprises at the fixed bracket component a half-cylindrical support surface with a predetermined radius and a snapper having a half-cylindrical retaining surface and comprises at the mobile bracket component a complementary half-cylindrical support surface with the same predetermined radius and a half-cylindrical pocket adapted to receive the snapper of the flexible bracket component. After having set the inclination angle, both bracket components of the bracket 4-j illustrated in Figure 4 can be joined permanently together with the set inclination angle by welding, gluing or bonding both bracket components together. In a possible embodiment, the rectified stand with its predetermined height is selected from a group of available rectified stands corresponding to windshields with different inclination angles of the same or different carlines.

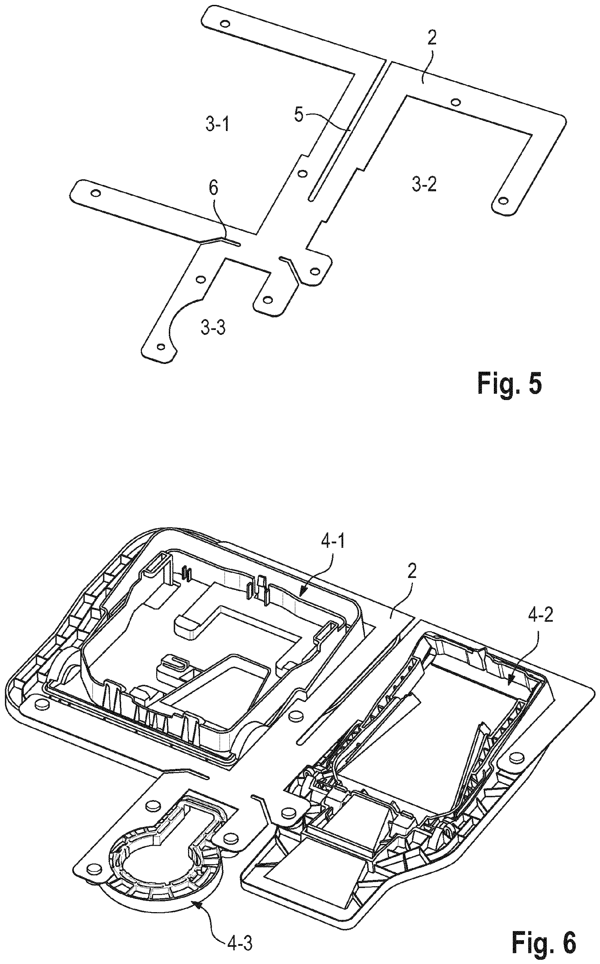

Figure 5 shows a perspective view of an exemplary embodiment of a plate 2 which can be used in a modular bracket assembly 1 according to the first aspect of the present invention. In the embodiment shown in Figure 5, the plate 2 is designed such that it can connect three different brackets 4-i together. For each bracket 4-i three connecting holes are provided for connecting the respective bracket 4-i with the supporting connection plate 2. In a possible embodiment, each bracket 4-i is attached to the connecting plate 2 by means of snap rivets, such as RICHCO SRP-4065. In a possible embodiment, the connecting plate 2 illustrated in Fig. 5 is made of a sheet metal plate. The connecting plate 2 is flexible and can be fixed to any curved surface of the vehicle, in particular to a curved windshield of the vehicle. As can be seen in Figure 5, the plate 2 further comprises cutouts for bending of the plate in both directions of the curved plane. The plate 2 further comprises interface cutouts of a predefined shape for interfaces of the three different brackets 4-i which include components of the driver assistance system. In a possible embodiment, the plate 2 illustrated in Figure 5 can further comprise additional support accessory mounting components, such as cable fixing hooks, etc. (not illustrated in Figure 5).

Figure 6 shows a perspective view on the preassembled brackets 4-i connected to the plate 2 illustrated in Figure 5 by means of snap rivets. The preassembled part illustrated in Figure 6 can then be fixed to a curved surface of the vehicle such as a windshield or a surface of the vehicle's chassis. In the shown exemplary embodiment, the preassembled part comprises three brackets 4-1, 4-2, 4-3 connected together by means of the connecting plate 2, wherein the second bracket 4-2 is the bracket illustrated in Figure 4 and the third bracket 4-3 is the rain sensor bracket illustrated in Figure 3. The number of brackets 4-i connected by means of a connecting plate 2 can vary. The plate 2 is adapted to connect at least two brackets 4-i together. The plate 2 and connecting holes within the plate 2 as illustrated in Figure 5 define a relative position of all brackets 4-i preassembled on the plate 2. Accordingly, the sensor devices received by the brackets 4-i can be positioned more precisely on the curved surface in a single assembly step, for instance when the preassembled brackets of Figure 6 are mounted on a windshield of the vehicle. In a possible embodiment, after having preassembled the different brackets 4-i on the connecting plate 2, an inclination angle of an adjustable multi-used windshield bracket consisting of at least two bracket components, such as bracket 4-2, can be adjusted and fixed before performing the final mounting of the preassembled brackets to the curved surface of the vehicle. In a possible embodiment, the connecting plate 2 is made from a corrosion-resistant, fireproof material. In a possible embodiment, the connecting plate 2 is made from aluminium or steel. The modular bracket assembly 1 according to the present invention can be used to increase flexibly and can be redesigned easily in response to configuration changes. The modular bracket assembly 1 according to the present invention allows to use existing standard brackets 4-i with existing interfaces. The modular bracket assembly 1 according to the present invention improves the production facility and also the logistics of the manufacturing process. With the modular bracket assembly 1 according to the present invention it is possible to supply a single preassembled part to a production assembly line of a car manufacturer. Further, the assembly workers at the production facility have only to mount a single integrated modular bracket assembly 1 to the curved surface, where the relative position of the different brackets 4-i is predefined so that the precision for placing electronic components to a curved surface is significantly improved. Further, the time required for mounting the modular bracket assembly 1 according to the present invention as illustrated in Figure 6 to a curved windshield is significantly lower than mounting different brackets separately to the windshield. Consequently, the production time and production costs for mounting components of a driver assistance system in a vehicle are reduced.

### REFERENCE SIGNS

- 1: Modular bracket assembly
- 2: Plate
- 3-1, 3-2, 3-3: Interface cutouts
- 4-1, 4-2, 4-3, 4-i, 4-j: Brackets
- 5, 6: Cutouts

## Claims

1. A modular bracket assembly for mounting components of a driver assistance system of a vehicle,
said modular bracket assembly (1) comprising:
a plate, wherein the plate (2) is adapted to be fixed to a surface of said vehicle,
**characterized in that**
the plate (2) having interface cutouts (3) for interfaces of at least two brackets (4) preassembled on said plate (2),
wherein each bracket (4) includes components of the driver assistance system.

2. The modular bracket assembly according to claim 1, wherein said plate (2) is flexible, semi-flexible or rigid to be fixed on a curved surface of said vehicle.

3. The modular bracket assembly according to claim 1 or 2, wherein said plate (2) is flexible to be fixed to a curved windshield of said vehicle.

4. The modular bracket assembly according to one of the preceding claims 1 to 3,
wherein said plate (2) comprises cutouts (5,6) for bending of said plate.

5. The modular bracket assembly according to one of the preceding claims 1 to 4,
wherein said plate (2) defines a relative position of all brackets (4) preassembled on said plate (2).

6. The modular bracket assembly according to one of the preceding claims 1 to 5,
wherein said plate (2) is adapted to support accessory mounting components.

7. The modular bracket assembly according to one of the preceding claims 1 to 6,
wherein said plate (2) is made from a flexible sheet metal or flexible plastic sheet.

8. The modular bracket assembly according to one of the preceding claims 1 to 7,
wherein said at least two brackets (4) are fixed to said plate (2) by snap rivets, screws or welding seams.

9. The modular bracket assembly according to one of the preceding claims 1 to 8,
wherein said plate (2) is designed for a specific vehicle type.

10. A driver assistance system of a vehicle comprising electronic components included in different brackets (4) preassembled on a plate (2) of a modular bracket assembly (1) according to one of the preceding claims 1 to 9.

11. A vehicle having a windshield attached to a chassis of the vehicle,
wherein at least on modular bracket assembly (1) according to one of the preceding claims 1 to 9 is fixed to said windshield and/or to a surface of said vehicle's chassis.

12. A method for mounting components of a driver assistance system of a vehicle,
said method **characterized by** comprising following steps:
(a) preassembling (S1) at least two brackets (4) including components of said driver assistance system on a connecting plate (2) having interface cutouts (3) for interfaces of said brackets (4); and
(b) fixing (S2) the preassembled brackets to a surface of said vehicle.

13. The method according to claim 12,
wherein the at least two brackets (4) are connected to said connecting plate (2) by snap rivets, screws or welding seams.

14. The method according to claim 12 or 13,
wherein said connecting plate (2) is manufactured from a flexible material to be fixed to a curved surface of a vehicle, in particular to a curved windshield of said vehicle and/or to a curved surface of said vehicle's chassis.

15. The method according to one of the preceding claims 12 to 14,
wherein the shape of said connecting plate (2) is designed for the vehicle's production line.

## Patentansprüche

1. Modulare Halterungsbaugruppe zur Montage von Bauteilen eines Fahrerassistenzsystems eines Fahrzeugs,
wobei die modulare Halterungsbaugruppe (1) umfasst:
eine Platte, wobei die Platte (2) für ihre Befestigung an einer Oberfläche des Fahrzeugs angepasst ist,
**dadurch gekennzeichnet, dass**
die Platte (2) Anschlussstellenausschnitte (3) für Anschlussstellen von mindestens zwei auf der Platte (2) vormontierten Halterungen (4) aufweist,
wobei jede Halterung (4) Bauteile des Fahrerassistenzsystems einschließt.

2. Modulare Halterungsbaugruppe nach Anspruch 1, wobei die Platte (2) flexibel, halbstarr oder starr ist, um auf einer gekrümmten Oberfläche des Fahrzeugs befestigt zu werden.

3. Modulare Halterungsbaugruppe nach Anspruch 1 oder 2, wobei die Platte (2) flexibel ist, um an einer gekrümmten Windschutzscheibe des Fahrzeugs befestigt zu werden.

4. Modulare Halterungsbaugruppe nach einem der vorangehenden Ansprüche 1 bis 3,
wobei die Platte (2) Ausschnitte (5, 6) zum Biegen der Platte umfasst.

5. Modulare Halterungsbaugruppe nach einem der vorangehenden Ansprüche 1 bis 4,
wobei die Platte (2) eine relative Position aller auf der Platte (2) vormontierten Halterungen (4) bestimmt.

6. Modulare Halterungsbaugruppe nach einem der vorangehenden Ansprüche 1 bis 5,
wobei die Platte (2) so angepasst ist, dass sie zusätzliche Montagebauteile trägt.

7. Modulare Halterungsbaugruppe nach einem der vorangehenden Ansprüche 1 bis 6,
wobei die Platte (2) aus flexiblem Blech oder flexibler Kunststofffolie hergestellt ist.

8. Modulare Halterungsbaugruppe nach einem der vorangehenden Ansprüche 1 bis 7,
wobei die mindestens zwei Halterungen (4) mittels Schnappnieten, Schrauben oder Schweißnähten an der Platte (2) befestigt sind.

9. Modulare Halterungsbaugruppe nach einem der vorangehenden Ansprüche 1 bis 8,
wobei die Platte (2) für einen spezifischen Fahrzeugtyp ausgelegt ist.

10. Fahrerassistenzsystem eines Fahrzeugs, umfassend elektronische Bauteile, die in unterschiedlichen Halterungen (4) eingeschlossen sind, die auf einer Platte (2) einer modularen Halterungsbaugruppe (1) nach einem der vorangehenden Ansprüche 1 bis 9 vormontiert sind.

11. Fahrzeug mit einer an einem Fahrgestell des Fahrzeugs angebrachten Windschutzscheibe,
wobei mindestens eine modulare Halterungsbaugruppe (1) nach einem der vorangehenden Ansprüche 1 bis 9 an der Windschutzscheibe und/oder an einer Oberfläche des Fahrgestells des Fahrzeugs befestigt ist.

12. Verfahren zur Montage von Bauteilen eines Fahrerassistenzsystems eines Fahrzeugs,
wobei das Verfahren durch das Umfassen der folgenden Schritte gekennzeichnet ist:
a) Vormontieren (S1) von mindestens zwei Halterungen (4), die Bauteile des Fahrerassistenzsystems einschließen, auf einer Verbindungsplatte (2), die Anschlussstellenausschnitte (3) für Anschlussstellen der Halterungen (4) aufweist; und
b) Befestigen (S2) der vormontierten Halterungen an einer Oberfläche des Fahrzeugs.

13. Verfahren nach Anspruch 12,
wobei die mindestens zwei Halterungen (4) mittels Schnappnieten, Schrauben oder Schweißnähten mit der Verbindungsplatte (2) verbunden sind.

14. Verfahren nach Anspruch 12 oder 13,
wobei die Verbindungsplatte (2) aus einem flexiblem Material hergestellt ist, um an einer gekrümmten Oberfläche eines Fahrzeugs, insbesondere an einer gekrümmten Windschutzscheibe des Fahrzeugs und/oder an einer gekrümmten Oberfläche des Fahrgestells des Fahrzeugs befestigt zu werden.

15. Verfahren nach einem der vorangehenden Ansprüche 12 bis 14, wobei die Form der Verbindungsplatte (2) für die Fertigungslinie des Fahrzeugs ausgelegt ist.

## Revendications

1. Ensemble de support modulaire destiné au montage de composants d'un système d'assistance à la conduite d'un véhicule,
ledit ensemble de support modulaire (1) comprenant :
une plaque, la plaque (2) étant adaptée pour être fixée à une surface dudit véhicule,
**caractérisé en ce que**
la plaque (2) a des découpes (3) d'interface pour des interfaces d'au moins deux supports (4) préassemblés sur ladite plaque (2),
chaque support (4) incluant des composants du système d'assistance à la conduite.

2. Ensemble de support modulaire selon la revendication 1, dans lequel ladite plaque (2) est flexible, semi-flexible ou rigide pour être fixée sur une surface incurvée dudit véhicule.

3. Ensemble de support modulaire selon la revendication 1 ou 2,
dans lequel ladite plaque (2) est flexible pour être fixée à un parebrise incurvé dudit véhicule.

4. Ensemble de support modulaire selon l'une des revendications précédentes 1 à 3,
dans lequel ladite plaque (2) comprend des découpes (5, 6) pour le cintrage de ladite plaque.

5. Ensemble de support modulaire selon l'une des revendications précédentes 1 à 4,
dans lequel ladite plaque (2) définit une position relative de tous les supports (4) préassemblés sur ladite plaque (2).

6. Ensemble de support modulaire selon l'une des revendications précédentes 1 à 5,
dans lequel ladite plaque (2) est adaptée pour supporter des composants de montage accessoires.

7. Ensemble de support modulaire selon l'une des revendications précédentes 1 à 6,
dans lequel ladite plaque (2) est réalisée dans une tôle flexible ou une feuille de plastique flexible.

8. Ensemble de support modulaire selon l'une des revendications précédentes 1 à 7,
dans lequel les supports (4) au moins au nombre de deux sont fixés à ladite plaque (2) par des rivets à clipser, des vis ou des soudures.

9. Ensemble de support modulaire selon l'une des revendications précédentes 1 à 8,
dans lequel ladite plaque (2) est conçue pour un type de véhicule spécifique.

10. Système d'assistance à la conduite d'un véhicule, comprenant des composants électroniques inclus dans différents supports (4) préassemblés sur une plaque (2) d'un ensemble de support modulaire (1) selon l'une des revendications précédentes 1 à 9.

11. Véhicule ayant un parebrise attaché à un châssis du véhicule,
dans lequel au moins un ensemble de support modulaire (1) selon l'une des revendications précédentes 1 à 9 est fixé audit parebrise et/ou à une surface dudit châssis du véhicule.

12. Procédé de montage de composants d'un système d'assistance à la conduite d'un véhicule,
le procédé étant **caractérisé en ce qu'**il comprend les étapes suivantes :
(a) le pré-assemblage (S1) d'au moins deux supports (4) incluant des composants dudit système d'assistance à la conduite sur une plaque (2) de raccordement ayant des découpes (3) d'interface pour des interfaces desdits supports (4) ; et
(b) la fixation (S2) des supports préassemblés à une surface dudit véhicule.

13. Procédé selon la revendication 12,
dans lequel les supports (4) au moins au nombre de deux sont raccordés à ladite plaque (2) de raccordement par des rivets à clipser, des vis ou des soudures.

14. Procédé selon la revendication 12 ou 13,
dans lequel ladite plaque (2) de raccordement est fabriquée dans un matériau flexible destiné à être fixé à une surface incurvée d'un véhicule, en particulier à un parebrise incurvé dudit véhicule et/ou à une surface incurvée dudit châssis du véhicule.

15. Procédé selon l'une des revendications précédentes 12 à 14,
dans lequel la forme de ladite plaque (2) de raccordement est conçue pour la ligne de production du véhicule.
